# EUROPEAN PATENT APPLICATION

(11) **EP 2 778 309 A1**
(43) Date of publication of application: **17.09.2014**
(21) Application number: 13158668.7
(22) Date of filing: 11.03.2013
(51) Int. Cl.: E04B 2/88, E04B 5/46

(54) **Method of forming adhesive connections**

(71) Applicant: 3M Innovative Properties Company, Saint Paul, MN 55133-3427 (US)
(72) Inventor: Ballesteros Macho, Fernando, 1831 Diegem (BE); Fernandez, Mariano M., 1831 Diegem (BE); Garcia, Henri, 1831 Diegem (BE)
(74) Representative: Gabriel, Kiroubagaranne

(57) **Abstract**

The present disclosure relates to a composite assembly comprising an optically transparent substrate. The present disclosure is also directed to a method of forming an adhesive connection between an optically transparent substrate and a second substrate.

## Description

### Technical Field

The present disclosure relates to composite assemblies comprising an optically transparent substrate. The present disclosure is also directed to a method of forming an adhesive connection between an optically transparent substrate and a second substrate.

### Background

The use of large-area glazing in modern architecture has become increasingly popular. Applications range from curtain wall façade to glass floors and generally consist of glass panels mounted onto a sub-frame of metallic (e.g. steel or aluminum alloy) elements. More recently, alternative mechanical connections have been developed so as to enable a higher degree of transparency and a more attractive visual appearance in glazing systems.

The most popular alternative mechanical connection, also referred to as point fixing or point glazing, consists of a stainless steel bolt in a countersunk hole in a frameless glass panel and provided with an intermediate softer liner material (e.g. aluminum or nylon) so as to reduce the bearing stresses. The glass panels for use in these mechanical connection techniques has to be thermally treated (tempering) to induce a surface pre-compression thereby increasing the manufacturing complexity and the associated production costs. Also, the required glass drilling step typically produces a large amount of broken glass.

An alternative mechanical technique for interconnecting glass panes is described in US 3,778,956 (Martin). The disclosed method produces a substantial gap between the interconnected glass panes which may then need to be filled with an appropriate sealing material.

Without contesting the technical advantages associated with the solutions disclosed in the art, there is still a need for a convenient and efficient method of forming an adhesive connection between an optically transparent substrate and a second substrate, which would overcome the deficiencies previously mentioned.

Other advantages of the method and composite assemblies of the disclosure will be apparent from the following description.

### Summary

According to one aspect, the present disclosure relates to a method of forming an adhesive connection between a first optically transparent substrate and a second substrate, the method comprising the steps of:
a) providing a connecting device suitable for connecting the optically transparent substrate and a second substrate and comprising at least one first connector comprising a contact portion suitable to form an adhesive connection with the first optically transparent substrate, wherein the surface of the contact portion is provided with at least one recess;
b) applying an adhesive composition onto at least part of the surface of the contact portion thereby substantially filling the recess;
c) contacting the contact portion provided with the adhesive composition with the first optically transparent substrate.

According to another aspect, the present disclosure is directed to a connecting device for connecting a first optically transparent substrate and a second substrate, which comprises at least one first connector comprising a contact portion suitable to form an adhesive connection with the first optically transparent substrate, wherein the surface of the contact portion is provided with at least one recess.

According to still another aspect of the present disclosure, it is provided a composite assembly comprising :
a) a first optically transparent substrate;
b) a connecting device suitable for connecting the first optically transparent substrate and the second substrate and comprising at least one first connector comprising a contact portion suitable to form an adhesive connection with the first optically transparent substrate, wherein the surface of the contact portion is provided with at least one recess;
c) an adhesive composition applied onto at least part of the surface of the contact portion of the at least one first connector; and
d) optionally, an adhesion enhancing composition applied onto at least part of the surface of the first optically transparent substrate; and
e) optionally, an adhesion enhancing composition applied onto at least part of the surface of the contact portion of the at least one first connector;
wherein the adhesive composition substantially fills the recess, and the contact portion provided with the adhesive composition is contacted with the first optically transparent substrate.

In still another aspect, the present disclosure is directed to the use of a connecting device suitable for connecting a first optically transparent substrate and a second substrate, and comprising at least one first connector comprising a contact portion suitable to form an adhesive connection with the first optically transparent substrate, wherein the surface of the contact portion is provided with at least one recess, for forming an adhesive connection between the first optically transparent substrate and the second substrate.

### Brief Description of the Figures

Fig.1 schematically represents one execution of a connecting device according to one aspect of the present disclosure.
Fig.2 schematically represents one execution of a connector for use in the present disclosure.
Fig.3 schematically represents another perspective view of the connector of Fig.2.
Fig.4 schematically represents another execution of a connector for use in the present disclosure.
Fig.5 schematically represents another execution of a connector for use in the present disclosure.
Fig.6 schematically represents another execution of a connector for use in the present disclosure.
Fig.7 schematically represents still another execution of a connector for use in the present disclosure.

### Detailed description

According to one aspect, the present disclosure relates to a method of forming an adhesive connection between a first optically transparent substrate and a second substrate, the method comprising the steps of:
a) providing a connecting device suitable for connecting the first optically transparent substrate and a second substrate and comprising at least one first connector comprising a contact portion suitable to form an adhesive connection with the first optically transparent substrate, wherein the surface of the contact portion is provided with at least one recess;
b) applying an adhesive composition onto at least part of the surface of the contact portion thereby substantially filling the recess;
c) contacting the contact portion provided with the adhesive composition with the first optically transparent substrate.

The method of the present disclosure has been found to provide convenient and efficient adhesive connection between an optically transparent substrate and a second substrate.

Any optically transparent substrate may be used in the context of the present disclosure. Suitable optically transparent substrates for use herein are commonly known in the art and will be easily identified by those skilled in the art, in the light of the present description.

Exemplary optically transparent substrates for use herein may be advantageously selected from the group consisting of glass (such a e.g. fritted glass, borosilicate glass and soda-lime glass), poly(methyl methacrylate), acrylic / PMMA, polycarbonate, and any combinations or mixtures thereof.

As will be easily apparent to those skilled in the art in the light of the present description, and depending on the ultimate application, the optically transparent substrate for use herein, may be combined with other material thereby forming a composite substrate having an overall reduced transparency.

In a preferred aspect, the first optically transparent substrate for use herein is a glass substrate. In still another preferred aspect, the second substrate for use herein is a second optically transparent substrate, preferably a second glass substrate. Accordingly, in some preferred aspects, the method according to one aspect of the present disclosure is a method of forming an adhesive connection between two glass substrates.

Glass substrates for use herein may in particular be selected from the group consisting of glass panels and glass panes which are typically used in architectural glazing.

Any connecting device suitable for connecting a first optically transparent substrate and a second substrate, may be used in the context of the present disclosure, provided the connecting device comprises at least one first connector comprising a contact portion suitable to form an adhesive connection with the first optically transparent substrate, and the surface of the contact portion is provided with at least one recess.

Suitable connecting devices for use herein, but not provided with at least one recess, are commonly known in the art and will be easily identified by those skilled in the art, in the light of the present description.

Exemplary connecting devices for use herein may be advantageously selected from the group consisting of spider point glazing systems, point fixing or point support mechanical connecting systems, clamping systems and any combinations thereof.

In a preferred aspect, the connecting device is selected from the group consisting of spider point glazing systems.

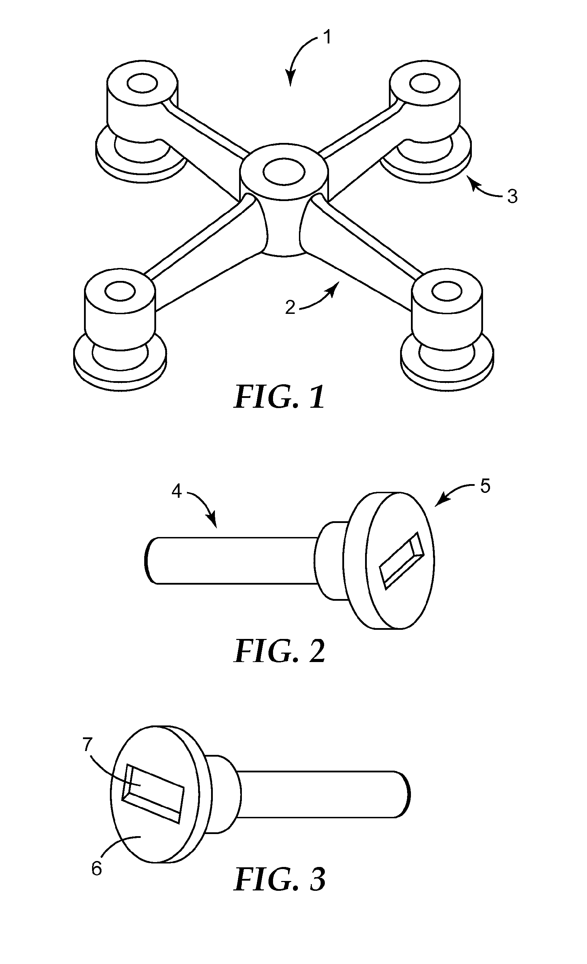

Without the intention to limit the disclosure thereto, **Fig.1** schematically represents one execution of a connecting device for use in the present disclosure, wherein the depicted connecting device **1,** which is of the spider point glazing system type, comprises a body portion 2 and four connectors **3.**

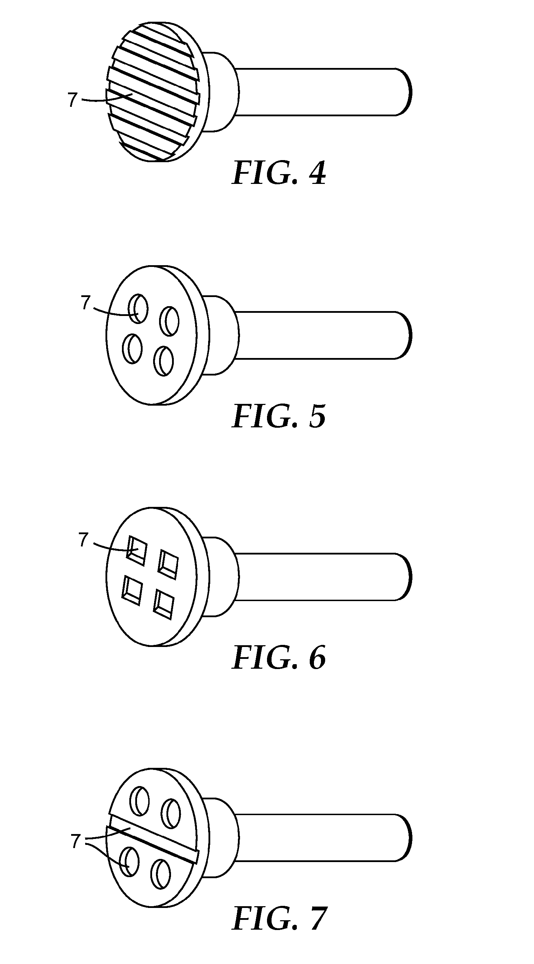

**Fig.2** and **Fig.3** schematically represent one exemplary connector for use in the present disclosure, wherein the depicted connector **3** comprises a stem portion **4** and a head portion **5.** The depicted head portion **5** comprises a contact portion **6** provided with a recess **7** of a substantially rectangular shape. Other exemplary types of recesses **7** for use herein are schematically represented in **Fig.4** to **Fig.7****,** which will be detailed hereinafter.

The connecting device for use herein, and in particular its body portion, may be made from any material well known to those skilled in the art. Exemplary material comprise, but are not limited to, steel, stainless steel, aluminum, composite material, and any combinations or mixtures thereof. In a preferred aspect, the body portion of the connecting device is made of a metallic material. More preferably, the body portion of the connecting device is made of stainless steel.

In some aspects, the connecting device is provided with a second connector comprising a contact portion suitable to form an adhesive connection with the second substrate. Advantageously, the surface of the contact portion of the second connector is provided with at least one recess.

According to the execution wherein the connecting device is provided with a second connector comprising a contact portion suitable to form an adhesive connection with the second substrate, and the surface of the contact portion of the second connector is provided with at least one recess, the method of the disclosure advantageously further comprises the steps of:
d) applying an adhesive composition onto at least part of the surface of the contact portion of the second connector thereby substantially filling the recess; and
e) contacting the contact portion of the second connector provided with the adhesive composition with the second substrate.

The at least one connector for use herein may be made from any material well known to those skilled in the art. Exemplary material comprise, but are not limited to, steel, stainless steel, aluminum, composite material, and any combinations or mixtures thereof. In a preferred aspect, the connector is made of a metallic material. More preferably, the connector is made of stainless steel.

In some advantageous aspects, the at least one connector is made of the same material as the body portion of the connector, but the disclosure is not that limited. Connecting devices comprising a body portion and connectors made of dissimilar material are also encompassed by the present disclosure.

In those aspects where the connecting device is provided with a plurality of connectors, these connectors may advantageously be identical in terms of their configuration, shape, size and composition. Alternatively, the connectors may be non-identical in terms of any or all of their configuration, shape, size and composition.

In a typical aspect, the at least one connector is removably attached to the connecting device. In those aspects where the connecting device is provided with a plurality of connectors, at least part of these connectors may advantageously be removably attached to the connecting device. Typically, the plurality of connectors is removably attached to the connecting device.

The at least one first connector for use herein comprises a contact portion suitable to form an adhesive connection with the first optically transparent substrate. In the context of the present disclosure, the expression "adhesive connection" is meant to refer to a connection involving adhesive bonding.

Suitable contact portions for use herein will be easily identified by those skilled in the art, in the light of the present description. Suitable contact portions will be very much dependent on the size, shape and configuration of the corresponding connector. Exemplary contact portions may take any of a circular, ellipsoidal, square, rectangular, triangular, trapezoidal or any polygonal shape. Although the disclosure is not that limited, suitable contact portions may advantageously be of a circular or ellipsoidal shape.

Suitable connectors for use herein may typically be releasably connected to the body portion of the connecting device by movable means, in particular by means of a ball joint, to provide mobility freedom to the connecting device and allow the first optically transparent substrates and other connected substrates to expand or adjust without tension concentration due to e.g. thermal expansion/contraction or mechanical constraint.

In some advantageous aspects, the contact portion of the connector may be provided with a spacer useful to ensure controlled thickness of the adhesive composition applied onto at least part of the surface of the contact portion and to prevent the adhesive composition from inadvertently flowing out of the connecting device. In a particular execution, the spacer may be adhesively attached and flush with the contours of the contact portion of the connector so as to further enhance the adhesive connection between the connector and the first optically transparent substrate.

The surface of the contact portion of the at least one connector for use herein, is provided with at least one recess.

Suitable recesses for use herein will be easily identified by those skilled in the art, in the light of the present description. Appropriate recesses will be very much dependent on the size, shape and configuration of the corresponding connector. Exemplary recesses for use herein may take any shape selected from the group consisting of circular, ellipsoidal, square, rectangular, triangular, trapezoidal, linear, wavy, polygonal shape, or any combinations thereof. The shape of the recess is herein meant to refer to the overall shape of the recess when seen from a top view in a direction substantially perpendicular to the plane formed by the surface of the contact portion of the at least one connector.

Without the intention to limit the disclosure thereto, suitable recesses for use herein may advantageously take any shape selected from the group consisting of circular, square, rectangular, or linear shape, or any combinations thereof. In a typical aspect, the recesses for use herein are substantially of a circular shape.

In some advantageous aspects, the surface of the contact portion of the at least one connector is provided with a plurality of recesses. These multiple recesses may advantageously be identical in terms of their configuration, shape, size and depth. Alternatively, the recesses may be non-identical in terms of any or all of their configuration, shape, size and depth.

In one exemplary aspect, the at least one recess is selected from the group consisting of grooves, channels, holes, niches, perforations, indentations and any combinations thereof. In one particular aspect, the at least one recess is selected from the group of perforations.

In those aspects where the at least one recess is selected from the group of perforations, these perforations may advantageously be of a circular shape.

The diameter of the circular perforations is for example comprised between 0.5 mm and 4 mm, between 1 mm and 3 mm, or between 1.5 mm and 2.5 mm. The diameter of the circular perforations may also for example be comprised between 2 mm and 10 mm, between 3 mm and 8 mm, between 4 mm and 6 mm, or between 4.5 mm and 5.5 mm. The depth of the circular perforations is for example comprised between 2 mm and 10 mm, between 3 mm and 8 mm, between 4 mm and 6 mm, or between 4.5 mm and 5.5 mm.

The depth:diameter aspect ratio of the circular perforations is for example comprised between 8:2 and 12:2, between 6:2 and 8:2, or between 4:2 to 6:2. The depth:diameter aspect ratio of the circular perforations may also for example be comprised between 1:2 and 4:2, or between 1:2 to 3:2. The depth:diameter aspect ratio of the circular perforations may also be of about 2:2.

The method of forming an adhesive connection between a first optically transparent substrate and a second substrate according to one aspect of the disclosure, comprises the step of applying an adhesive composition onto at least part of the surface of the contact portion thereby substantially filling the recess.

In the context of the present disclosure, the expression "substantially filling the recess" is meant to express that the volume occupied by the recess is filled with the adhesive composition at least at 50%, preferably at least 60%, more preferably at least 70%, even more preferably at least 80%, still more preferably at least at 90%, yet more preferably at least at 95% by volume of the recess.

Any adhesive composition, commonly known in the art, may be used in the context of the present disclosure, provided the adhesive composition is suitable for creating an adhesive connection between the first optically transparent substrate and the contact portion of the at least one connector.

In the context of the present disclosure, the term "adhesive composition" is also meant to encompass adhesive sealant compositions.

Suitable adhesive compositions for use herein will be easily identified by those skilled in the art, in the light of the present description. Suitable adhesive compositions will be very much dependent on the respective materials used to form the first optically transparent substrate and the at least one connector.

In some aspects, the adhesive composition for use herein may be advantageously selected from the group of so-called structural adhesives, well known to those skilled in the art.

Exemplary adhesive compositions for use herein include, but are not limited to, those selected from the group consisting of one-component polyurethane adhesives, two-component polyurethane adhesives, one-component epoxy adhesives, two-component epoxy adhesives, one-component acrylic adhesives, two-component acrylic adhesives, one-component silicone adhesives, two-component silicone adhesives, and any combinations or mixtures thereof.

In one preferred aspect, the adhesive composition for use herein is selected from the group consisting of one-component polyurethane adhesives and two-component polyurethane adhesives, more preferably from the group of one-component polyurethane adhesives.

In some advantageous aspects, the adhesive composition for use herein is substantially free of silicone.

According to some preferred executions, the method of forming an adhesive connection between a first optically transparent substrate and a second substrate according to one aspect of the disclosure, comprises the step of treating at least part of the surface of the first optically transparent substrate and/or of the second substrate with an adhesion enhancing composition.

In the context of the present disclosure, the term "adhesion enhancing composition" is meant to refer to those compositions which provide an adhesive composition with enhanced adhesive performance when the adhesive composition is applied onto a substrate. The term adhesion enhancing composition, used throughout the description, is in particular meant to encompass the so-called primer compositions or those compositions comprising components commonly referred to as adhesion promoters or coupling agents by those skilled in the art.

In some preferred aspects, the method of forming an adhesive connection between a first optically transparent substrate and a second substrate according to the disclosure, further comprises the step of treating at least part of the surface of the contact portion of the at least one first connector with an adhesion enhancing composition.

Any adhesion enhancing composition, commonly known in the art, may be virtually used in the context of the present disclosure, provided it is suitable for providing the specifically used adhesive composition with enhanced adhesive performance when the adhesive composition is applied onto the first optically transparent substrate (or onto the second substrate).

Suitable adhesion enhancing compositions for use herein will be easily identified by those skilled in the art, in the light of the present description. Appropriate adhesion enhancing compositions will be very much dependent on the composition of the adhesive and/or on the material used to form the first optically transparent substrate (or the second substrate) and/or the at least one connector.

Exemplary adhesion enhancing compositions for use herein include, but are not limited to, those selected from the group consisting of adhesion enhancing compositions for one-component polyurethane adhesives, two-component polyurethane adhesives, one-component epoxy adhesives, two-component epoxy adhesives, one-component acrylic adhesives, two-component acrylic adhesives, one-component silicone adhesives or two-component silicone adhesives.

In one preferred aspect, the adhesion enhancing composition for use herein is selected from the group consisting of adhesion enhancing compositions for one-component polyurethane adhesives or two-component polyurethane adhesives, more preferably from the group consisting of adhesion enhancing compositions for one-component polyurethane adhesives.

Exemplary adhesion enhancing compositions for use herein include, but are not limited to, those selected from the group consisting of silane-comprising and isocyanate-comprising adhesion enhancing compositions. Adhesion enhancing compositions for use herein may be advantageously selected from the group of isocyanate-comprising adhesion enhancing compositions.

In the particular execution where the first optically transparent substrate is glass and the at least one connector is made of stainless steel, it is particularly beneficial to make use of a one-component polyurethane adhesive in combination with a isocyanate-comprising adhesion enhancing composition (or primer).

According to another aspect, the present disclosure relates to a connecting device for connecting a first optically transparent substrate and a second substrate, which comprises at least one first connector comprising a contact portion suitable to form an adhesive connection with the first optically transparent substrate, wherein the surface of the contact portion is provided with at least one recess.

Specific executions and aspects of the connecting device according to the disclosure, in particular with regard to the connector and the recess, are as described above in the context of the method of forming an adhesive connection between a first optically transparent substrate and a second substrate according to another aspect of the present disclosure.

In still another of the present disclosure, it is provided a composite assembly comprising:
a) a first optically transparent substrate;
b) a connecting device suitable for connecting the first optically transparent substrate with a second substrate and comprising at least one first connector comprising a contact portion suitable to form an adhesive connection with a first optically transparent substrate, wherein the surface of the contact portion is provided with at least one recess;
c) an adhesive composition applied onto at least part of the surface of the contact portion of the at least one first connector; and
d) optionally, an adhesion enhancing composition applied onto at least part of the surface of the first optically transparent substrate; and
e) optionally, an adhesion enhancing composition applied onto at least part of the surface of the contact portion of the at least one first connector;
wherein the adhesive composition substantially fills the recess, and the contact portion provided with the adhesive composition is contacted with the first optically transparent substrate.

Specific executions and aspects of the composite assembly according to the present disclosure, in particular with regard to the first optically transparent substrate, the second substrate, the connecting device, the adhesive composition and the adhesion enhancing composition, are as described above in the context of the method of forming an adhesive connection between a first optically transparent substrate and a second substrate according to another aspect of the present disclosure.

In one specific aspect of the composite assembly, the first optically transparent substrate is a glass substrate. Advantageously, the second substrate is a second glass substrate.

According to a particular aspect, the composite assembly has a tensile strength of at least 5 MPa, preferably at least 10 MPa, more preferably at least 20 MPa, even more preferably at least 30 MPa, still more preferably at least 40 MPa, and a cohesive failure mode of at least 60%, preferably at least 70%, more preferably at least 80%, even more preferably at least 90%, still more preferably at least 95%, when measured at 23°C according to the tensile strength measurement method described in the experimental section.

In some aspects of the disclosure, the composite assembly has a tensile strength of at least 1 MPa, preferably at least 1.5 MPa, more preferably at least 2 MPa, even more preferably at least 3 MPa, still more preferably at least 4 MPa, yet more preferably at least 5 MPa, and a cohesive failure mode of at least 60%, preferably at least 70%, more preferably at least 80%, even more preferably at least 90%, still more preferably at least 95%, when measured at 80°C according to the tensile strength measurement method described in the experimental section.

In some other aspects of the disclosure, the composite assembly has a shear strength of at least 5 MPa, preferably at least 10 MPa, more preferably at least 20 MPa, even more preferably at least 30 MPa, still more preferably at least 40 MPa, and a cohesive failure mode of at least 60%, preferably at least 70%, more preferably at least 80%, even more preferably at least 90%, still more preferably at least 95%, when measured at 23°C according to the shear strength measurement method described in the experimental section.

In some other aspects of the disclosure, the composite assembly has a shear strength of at least 1 MPa, preferably at least 1.5 MPa, more preferably at least 2 MPa, even more preferably at least 3 MPa, still more preferably at least 4 MPa, yet more preferably at least 5 MPa, and a cohesive failure mode of at least 60%, preferably at least 70%, more preferably at least 80%, even more preferably at least 90%, still more preferably at least 95%, when measured at 80°C according to the shear strength measurement method described in the experimental section.

According to still another aspect, the present disclosure is directed to a kit of parts for forming an adhesive connection between a first optically transparent substrate and a second substrate, which comprises:
a) a connecting device suitable for connecting the first optically transparent substrate and a second substrate, and comprising at least one first connector comprising a contact portion suitable to form an adhesive connection with the first optically transparent substrate, wherein the surface of the contact portion is provided with at least one recess;
b) an adhesive composition capable of substantially filling the recess; and
c) optionally, an adhesion enhancing composition.

Specific executions and aspects of the composite assembly according to the present disclosure, in particular with regard to the first optically transparent substrate, the second substrate, the connecting device, the adhesive composition and the adhesion enhancing composition, are as described above in the context of the method of forming an adhesive connection between a first optically transparent substrate and a second substrate according to another aspect of the present disclosure.

In one specific aspect of the kit of parts according to the disclosure, the first optically transparent substrate is a glass substrate. Advantageously, the second substrate is a second glass substrate.

In still another aspect, the present disclosure relates to the use of a connecting device suitable for connecting a first optically transparent substrate and a second substrate, and comprising at least one first connector comprising a contact portion suitable to form an adhesive connection with the first optically transparent substrate, wherein the surface of the contact portion is provided with at least one recess, for forming an adhesive connection between the first optically transparent substrate and the second substrate.

In one particular aspect of the use according to then disclosure, the first optically transparent substrate is a glass substrate. Advantageously, the second substrate is a second glass substrate.

Item 1 is a method of forming an adhesive connection between a first optically transparent substrate and a second substrate, the method comprising the steps of:
a) providing a connecting device suitable for connecting said first optically transparent substrate and a second substrate and comprising at least one first connector comprising a contact portion suitable to form an adhesive connection with the first optically transparent substrate, wherein the surface of the contact portion is provided with at least one recess;
b) applying an adhesive composition onto at least part of the surface of the contact portion thereby substantially filling the recess;
c) contacting the contact portion provided with the adhesive composition with the first optically transparent substrate.

Item 2 is the method of item 1, wherein the connecting device is provided with a second connector comprising a contact portion suitable to form an adhesive connection with the second substrate.

Item 3 is the method of item 2, wherein the surface of the contact portion of the second connector is provided with at least one recess, and wherein the method further comprises the steps of:
d) applying an adhesive composition onto at least part of the surface of the contact portion of the second connector thereby substantially filling the recess; and
e) contacting the contact portion of the second connector provided with the adhesive composition with the second substrate.

Item 4 is a method according to any of the preceding items, wherein the first optically transparent substrate is a glass substrate.

Item 5 is a method according to any of the preceding items, wherein the second substrate is a second optically transparent substrate, preferably a second glass substrate.

Item 6 is a method according to any of the preceding items for forming an adhesive connection between two glass substrates.

Item 7 is a method according to any of the preceding items, wherein the recess is selected from the group consisting of grooves, channels, holes, niches, perforations, indentations and any combinations thereof.

Item 8 is a method according to any of the preceding items, wherein the recess is selected from the group of perforations and grooves, preferably perforations.

Item 9 is a method according to item 8, wherein the recess is a circular perforation which has preferably a diameter comprised between 0.5 mm and 4 mm, between 1 mm and 3 mm, or between 1.5 mm and 2.5 mm; and wherein the circular perforation preferably has a depth comprised between 2 mm and 10 mm, between 3 mm and 8 mm, between 4 mm and 6 mm, or even between 4.5 mm and 5.5 mm.

Item 10 is a method according to item 8, wherein the recess is a circular perforation which has preferably a diameter comprised between 2 mm and 10 mm, between 3 mm and 8 mm, between 4 mm and 6 mm, or even between 4.5 mm and 5.5 mm; and wherein the circular perforation preferably has a depth comprised between 2 mm and 10 mm, preferably between 3 mm and 8 mm, more preferably between 4 mm and 6 mm, even more preferably between 4.5 mm and 5.5 mm.

Item 11 is a method according to item 9, wherein the depth:diameter aspect ratio of the circular perforation is comprised between 8:2 to 12:2, preferably between 6:2 to 8:2, more preferably between 4:2 to 6:2.

Item 12 is a method according to item 10, wherein the depth:diameter aspect ratio of the circular perforations is comprised between 1:2 and 4:2, or between 1:2 to 3:2, or is of about 2:2.

Item 13 is a method according to any of the preceding items, wherein the adhesive composition is selected from the group consisting of one-component polyurethane adhesives, two-component polyurethane adhesives, one-component epoxy adhesives, two-component epoxy adhesives, one-component acrylic adhesives, two-component acrylic adhesives, one-component silicone adhesives, two-component silicone adhesives, and any combinations or mixtures thereof.

Item 14 is a method according to any of the preceding items, wherein the adhesive composition is selected from the group consisting of one-component polyurethane adhesives and two-component polyurethane adhesives, preferably from the group of one-component polyurethane adhesives.

Item 15 is a method according to any of item 13 or 14, wherein the adhesive composition is substantially free of silicone.

Item 16 is a method according to any of the preceding items, which further comprises the step of treating at least part of the surface of the first glass substrate and/or of the second substrate with an adhesion enhancing composition.

Item 17 is a method according to any of the preceding items, which further comprises the step of treating at least part of the surface of the contact portion of the at least one first connector with an adhesion enhancing composition.

Item 18 is a method according to any of item 16 or 17, wherein the adhesion enhancing composition is selected from the group consisting of adhesion enhancing compositions for one-component polyurethane adhesives, two-component polyurethane adhesives, one-component epoxy adhesives, two-component epoxy adhesives, one-component acrylic adhesives, two-component acrylic adhesives, one-component silicone adhesives or two-component silicone adhesives.

Item 19 is a method according to item 18, wherein the adhesion enhancing composition is selected from the group consisting of adhesion enhancing compositions for one-component polyurethane adhesives or two-component polyurethane adhesives, preferably from the group consisting of adhesion enhancing compositions for one-component polyurethane adhesives.

Item 20 is a method according to any of items 16 to 19, wherein the adhesion enhancing composition is selected from the group consisting of silane-comprising and isocyanate-comprising adhesion enhancing compositions, preferably from the group of isocyanate-comprising adhesion enhancing compositions.

Item 21 is a method according to any of the preceding items, wherein the at least one first connector and/or the connecting device is made of a metallic material, which preferably comprises stainless steel.

Item 22 is a method according to any of the preceding items, wherein the connecting device is selected from the group consisting of spider point glazing systems, point fixing or point support mechanical connecting systems, clamping systems and any combinations thereof.

Item 23 is a method according to item 22, wherein the connecting device is selected from the group consisting of spider point glazing systems.

Item 24 is a connecting device for connecting a first optically transparent substrate and a second substrate, which comprises at least one first connector comprising a contact portion suitable to form an adhesive connection with the first optically transparent substrate, wherein the surface of the contact portion is provided with at least one recess.

Item 25 is the connecting device of item 24, wherein the recess is selected from the group consisting of grooves, channels, holes, niches, perforations, indentations and any combinations thereof.

Item 26 is a connecting device according to any of item 24 or 25, wherein the recess is selected from the group of perforations and grooves, preferably perforations.

Item 27 is a connecting device according to any of items 24 to 26, wherein the recess is a circular perforation which has preferably a diameter comprised between 0.5 mm and 4 mm, between 1 mm and 3 mm, or even between 1.5 mm and 2.5 mm; and wherein the circular perforation preferably has a depth comprised between 2 mm and 10 mm, between 3 mm and 8 mm, between 4 mm and 6 mm, or even between 4.5 mm and 5.5 mm.

Item 28 is a connecting device according to any of items 24 to 26, wherein the recess is a circular perforation which has preferably a diameter comprised between 2 mm and 10 mm, between 3 mm and 8 mm, between 4 mm and 6 mm, or even between 4.5 mm and 5.5 mm; and wherein the circular perforation preferably has a depth comprised between 2 mm and 10 mm, between 3 mm and 8 mm, between 4 mm and 6 mm, or even between 4.5 mm and 5.5 mm.

Item 29 is a connecting device according to item 27, wherein the depth:diameter aspect ratio of the circular perforation is comprised between 8:2 and 12:2, between 6:2 and 8:2, or between 4:2 and 6:2.

Item 30 is a connecting device according to item 28, wherein the depth:diameter aspect ratio of the circular perforation is comprised between 1:2 and 4:2, or between 1:2 to 3:2, or is of about 2:2.

Item 31 is a connecting device according to any of items 24 to 30, wherein the at least one first connector and/or the connecting device is made of a metallic material, which preferably comprises stainless steel.

Item 32 is a connecting device according to any of items 24 to 31, which is selected from the group consisting of spider point glazing systems, point fixing or point support mechanical connecting systems, clamping systems and any combinations thereof.

Item 33 is a connecting device according to item 32, which is selected from the group consisting of spider point glazing systems.

Item 34 is a composite assembly comprising :
a) a first optically transparent substrate;
b) a connecting device suitable for connecting the first optically transparent substrate with a second substrate and comprising at least one first connector comprising a contact portion suitable to form an adhesive connection with the first optically transparent substrate, wherein the surface of the contact portion is provided with at least one recess;
c) an adhesive composition applied onto at least part of the surface of the contact portion of the at least one first connector;
d) optionally, an adhesion enhancing composition applied onto at least part of the surface of the first optically transparent substrate; and
e) optionally, an adhesion enhancing composition applied onto at least part of the surface of the contact portion of the at least one first connector;
wherein the adhesive composition substantially fills the recess, and the contact portion provided with the adhesive composition is contacted with the first optically transparent substrate.

Item 35 is the composite assembly of item 34, wherein the first optically transparent substrate is a glass substrate.

Item 36 is a composite assembly according to any of item 34 or 35, which has a tensile strength of at least 5 MPa, preferably at least 10 MPa, more preferably at least 20 MPa, even more preferably at least 30 MPa, still more preferably at least 40 MPa, and a cohesive failure mode of at least 60%, preferably at least 70%, more preferably at least 80%, even more preferably at least 90%, still more preferably at least 95%, when measured at 23°C according to the tensile strength measurement method described in the experimental section.

Item 37 is a composite assembly according to any of items 34 to 36, which has a tensile strength of at least 1 MPa, preferably at least 1.5 MPa, more preferably at least 2 MPa, even more preferably at least 3 MPa, still more preferably at least 4 MPa, yet more preferably at least 5 MPa, and a cohesive failure mode of at least 60%, preferably at least 70%, more preferably at least 80%, even more preferably at least 90%, still more preferably at least 95%,when measured at 80°C according to the tensile strength measurement method described in the experimental section.

Item 38 is a composite assembly according to any of items 34 to 37, which has a shear strength of at least 5 MPa, preferably at least 10 MPa, more preferably at least 20 MPa, even more preferably at least 30 MPa, still more preferably at least 40 MPa, and a cohesive failure mode of at least 60%, preferably at least 70%, more preferably at least 80%, even more preferably at least 90%, still more preferably at least 95%, when measured at 23°C according to the shear strength measurement method described in the experimental section.

Item 39 is a composite assembly according to any of items 34 to 38, which has a shear strength of at least 1 MPa, preferably at least 1.5 MPa, more preferably at least 2 MPa, even more preferably at least 3 MPa, still more preferably at least 4 MPa, yet more preferably at least 5 MPa, and a cohesive failure mode of at least 60%, preferably at least 70%, more preferably at least 80%, even more preferably at least 90%, still more preferably at least 95%, when measured at 80°C according to the shear strength measurement method described in the experimental section.

Item 40 is a kit of parts for forming an adhesive connection between a first optically transparent substrate and a second substrate, which comprises:
a) a connecting device suitable for connecting the first optically transparent substrate and a second substrate, and comprising at least one first connector comprising a contact portion suitable to form an adhesive connection with the first optically transparent substrate, wherein the surface of the contact portion is provided with at least one recess;
b) an adhesive composition capable of substantially filling the recess; and
c) optionally, an adhesion enhancing composition.

Item 41 is the kit of parts of item 40, wherein the first optically transparent substrate is a first glass substrate.

Item 42 is a kit of parts according to any of item 40 or 41, wherein the adhesive composition is selected from the group consisting of one-component polyurethane adhesives, two-component polyurethane adhesives, one-component epoxy adhesives, two-component epoxy adhesives, one-component acrylic adhesives, two-component acrylic adhesives, one-component silicone adhesives, two-component silicone adhesives, and any combinations or mixtures thereof.

Item 43 is a kit of parts according to any of items 40 to 42, wherein the adhesive composition is selected from the group consisting of one-component polyurethane adhesives and two-component polyurethane adhesives, preferably from the group of one-component polyurethane adhesives.

Item 44 is a kit of parts according to any of items 40 to 43, wherein the adhesive composition is substantially free of silicone.

Item 45 is a kit of parts according to any of items 40 to 44, which further comprises an adhesion enhancing composition, which is preferably selected from the group consisting of adhesion enhancing compositions for one-component polyurethane adhesives, two-component polyurethane adhesives, one-component epoxy adhesives, two-component epoxy adhesives, one-component acrylic adhesives, two-component acrylic adhesives, one-component silicone adhesives or two-component silicone adhesives.

Item 46 is a kit of parts according to item 45, wherein the adhesion enhancing composition is selected from the group consisting of adhesion enhancing compositions for one-component polyurethane adhesives or two-component polyurethane adhesives, preferably from the group consisting of adhesion enhancing compositions for one-component polyurethane adhesives.

Item 47 is a kit of parts according to any of item 45 or 46, wherein the adhesion enhancing composition is selected from the group consisting of silane-comprising and isocyanate-comprising adhesion enhancing compositions, preferably from the group of isocyanate-comprising adhesion enhancing compositions.

Item 49 is the use of a connecting device suitable for connecting a first optically transparent substrate and a second substrate and comprising at least one first connector comprising a contact portion suitable to form an adhesive connection with the first optically transparent substrate, wherein the surface of the contact portion is provided with at least one recess, for forming an adhesive connection between the first optically transparent substrate and the second substrate.

Item 50 is the use according to item 49, wherein the first optically transparent substrate is a glass substrate.

### EXAMPLES

The disclosure is further illustrated by the following examples. These examples are merely for illustrative purposes only and are not meant to be limiting on the scope of the appended claims.

### Test Methods

### 1. Tensile Test.

Dynamic Test for the determination of the tensile strength of a composite assembly comprising a recessed connector and an optically transparent substrate.

### Sample preparation:

The surface of the contact portion of the recessed connector is wiped with heptane, and optionally wiped with a suitable adhesion enhancing composition. The surface of the optically transparent substrate is wiped with heptane, and optionally wiped with a suitable adhesion enhancing composition.

A suitable adhesive composition is applied onto the entire surface of the contact portion of the recessed connector thereby fully filling the recesses and forming a 1.0 mm glue line onto the surface of the contact portion of the recessed connector. For this purpose, two spacers in the form of copper or steel wires of an appropriate thickness are placed between the contact portion of the recessed connector and the first optically transparent substrate.

The surface of the contact portion of the recessed connector provided with the adhesive composition is pressed with the first optically transparent substrate until full contact is achieved between the two substrates and the metal spacers, thereby forming the sample composite assembly. The composite assembly is then conditioned 7 days under normal conditions until full cure is achieved. Any of a weight, clamp or another mechanical device may be necessary so as to maintain the pieces in perfect contact during the curing phase.

### Sample testing: At 80°C

The test is performed on an Instron 5567 tensile test machine, equipped with a 30 kN load cell and a heat chamber. The fully cured composite assembly sample is clamped in the jaws of the tensile machine, the heat chamber is set to 80 °C and is left on for at least 30 minutes. Then, the assembly is pulled at a speed of 2 mm/min, and the force necessary to achieve bond failure is measured.

### 2. Shear Test.

Dynamic Test for the determination of the shear strength of a composite assembly comprising a recessed connector and an optically transparent substrate.

### Sample preparation:

The surface of the contact portion of the recessed connector is wiped with heptane, and optionally wiped with a suitable adhesion enhancing composition. The surface of the optically transparent substrate is wiped with heptane, and optionally wiped with a suitable adhesion enhancing composition.

A suitable adhesive composition is applied onto the entire surface of the contact portion of the recessed connector thereby fully filling the recesses and forming a 1.0 mm glue line onto the surface of the contact portion of the recessed connector. For this purpose, two spacers in the form of steel wires of an appropriate thickness are placed between the contact portion of the recessed connector and the first optically transparent substrate.

The surface of the contact portion of the recessed connector provided with the adhesive composition is pressed with the first optically transparent substrate until full contact is achieved between the two substrates and the metal spacers, thereby forming the sample composite assembly. The composite assembly is then conditioned 7 days under normal conditions until full cure is achieved. Any of a weight, clamp or another mechanical device may be necessary so as to maintain the pieces in perfect contact during the curing phase.

### Sample testing: At 80°C

The test is performed on an Instron 5567 tensile test machine equipped with a 30 kN load cell and a heat chamber. The fully cured composite assembly sample is clamped in the jaws of the tensile machine, the heat chamber is set to 80 °C and is left on for at least 30 minutes. Then, the assembly is pulled at a speed of 2 mm/min, and the force necessary to achieve bond failure is measured.

### 3. Determination of adhesive failure percentage.

The percentage of adhesive failure is determined by visual inspection.

### List of substrates and materials used

3M Polyurethane Glass Adhesive Sealant 590, commercially available from 3M Company, St. Paul, MN/USA.

3M Plastic Primer P591, commercially available from 3M Company, St. Paul, MN/USA. Glass substrate test piece, having the following dimensions: 100 mm (length) x 100 mm (width) x 10 mm (thickness).

Stainless steel T-shape test piece connector with perforations, prepared as detailed below.

### Preparation of the perforated T-shape test piece:

The "base" of the T-shape test piece connector has the following dimensions 25 mm (length) x 25 mm (width), the total height of the piece being 25 mm, and the wall thickness being 6 mm. The base of the T-shape piece connector (contact portion) is perforated with a total of 20 holes of 5 mm diameter and 5 mm depth using a regular drill bit. The 20 holes are regularly spaced in four rows and four columns.

### Example

### Composite assembly

The recessed stainless steel T-shape test piece connector is degreased by immersion into heptane during 15 seconds. The degreased T-shape test piece connector is then allowed to dry for at least 15 minutes under normal conditions. The T-shape test piece connector is then immersed into 3M P591 adhesion enhancing composition for 10 seconds, and allowed to dry for at least 15 minutes under normal conditions.

The full surface of the glass substrate test piece is wiped with heptane and then allowed to dry for at least 15 minutes under normal conditions. The bonding surface of the glass substrate test piece is additionally wiped with 3M P591 adhesion enhancing composition, and allowed to dry for at least 15 minutes under normal conditions.

A 3M 590 adhesive composition is applied onto the entire surface of the contact portion of the recessed stainless steel T-shape test piece connector thereby fully filling the recesses and forming a 1.0 mm glue line onto the surface of the contact portion of the recessed connector. For this purpose, two spacers in the form of steel wires of an appropriate thickness are placed between the contact portion of the recessed connector and the glass substrate test piece.

The surface of the contact portion of the recessed stainless steel T-shape test piece connector provided with the adhesive composition is pressed against the glass substrate test piece until full contact is achieved between the two substrates and the metal spacers, thereby forming the composite assembly. The composite assembly is then conditioned 7 days under normal conditions until full cure is achieved. Suitable clamps are used to maintain the pieces in perfect contact during the curing phase.

The resulting composite assembly has a tensile strength of 2 MPa when measured at 80°C according to the tensile strength measurement method described above, and a cohesive failure mode of about 90%.

## Claims

1. A method of forming an adhesive connection between a first optically transparent substrate and a second substrate, the method comprising the steps of:
a) providing a connecting device suitable for connecting said first optically transparent substrate and a second substrate and comprising at least one first connector comprising a contact portion suitable to form an adhesive connection with the first optically transparent substrate, wherein the surface of the contact portion is provided with at least one recess;
b) applying an adhesive composition onto at least part of the surface of the contact portion thereby substantially filling the recess;
c) contacting the contact portion provided with the adhesive composition with the first optically transparent substrate.

2. A method according to claim 1, wherein the connecting device is provided with a second connector comprising a contact portion suitable to form an adhesive connection with the second substrate.

3. A method according to claim 2, wherein the surface of the contact portion of the second connector is provided with at least one recess, and wherein the method further comprises the steps of:
d) applying an adhesive composition onto at least part of the surface of the contact portion of the second connector thereby substantially filling the recess; and
e) contacting the contact portion of the second connector provided with the adhesive composition with the second substrate.

4. A method according to any of the preceding claims, wherein the first optically transparent substrate is a glass substrate.

5. A method according to any of the preceding claims, wherein the second substrate is a second optically transparent substrate, preferably a second glass substrate.

6. A method according to any of the preceding claims, wherein the recess is selected from the group consisting of grooves, channels, holes, niches, perforations, indentations and any combinations thereof.

7. A method according to any of the preceding claims, wherein the adhesive composition is selected from the group consisting of one-component polyurethane adhesives, two-component polyurethane adhesives, one-component epoxy adhesives, two-component epoxy adhesives, one-component acrylic adhesives, two-component acrylic adhesives, one-component silicone adhesives, two-component silicone adhesives, and any combinations or mixtures thereof.

8. A method according to any of the preceding claims, wherein the connecting device is selected from the group consisting of spider point glazing systems, point fixing or point support mechanical connecting systems, clamping systems and any combinations thereof.

9. A connecting device for connecting a first optically transparent substrate and a second substrate, which comprises at least one first connector comprising a contact portion suitable to form an adhesive connection with the first optically transparent substrate, wherein the surface of the contact portion is provided with at least one recess.

10. A connecting device according to claim 9, which is selected from the group consisting of spider point glazing systems, point fixing or point support mechanical connecting systems, clamping systems and any combinations thereof.

11. A composite assembly comprising :
a) a first optically transparent substrate;
b) a connecting device suitable for connecting the first optically transparent substrate with a second substrate and comprising at least one first connector comprising a contact portion suitable to form an adhesive connection with a first optically transparent substrate, wherein the surface of the contact portion is provided with at least one recess;
c) an adhesive composition applied onto at least part of the surface of the contact portion of the at least one first connector; and
d) optionally, an adhesion enhancing composition applied onto at least part of the surface of the first optically transparent substrate; and
e) optionally, an adhesion enhancing composition applied onto at least part of the surface of the contact portion of the at least one first connector;
wherein the adhesive composition substantially fills the recess, and the contact portion provided with the adhesive composition is contacted with the first optically transparent substrate.

12. A composite assembly according to claim 11, wherein the first optically transparent substrate is a glass substrate.

13. A composite assembly according to any of claim 11 or 12, which has a tensile strength of at least 1 MPa, preferably at least 1.5 MPa, more preferably at least 2 MPa, even more preferably at least 3 MPa, still more preferably at least 4 MPa, yet more preferably at least 5 MPa, and a cohesive failure mode of at least 60%, preferably at least 70%, more preferably at least 80%, even more preferably at least 90%, still more preferably at least 95%,when measured at 80°C according to the tensile strength measurement method described in the experimental section.

14. Use of a connecting device suitable for connecting a first optically transparent substrate and a second substrate and comprising at least one first connector comprising a contact portion suitable to form an adhesive connection with the first optically transparent substrate, wherein the surface of the contact portion is provided with at least one recess, for forming an adhesive connection between the first optically transparent substrate and the second substrate.

15. Use according to claim 14, wherein the first optically transparent substrate is a glass substrate.
